**Europäisches Patentamt**

**European Patent Office**

**Office européen des brevets**

(19)

(11) Veröffentlichungsnummer: **0 079 538**
**B1**

(12)

# EUROPÄISCHE PATENTSCHRIFT

(45) Veröffentlichungstag der Patentschrift:
**17.09.86**

(51) Int. Cl.⁴: **G 11 B 3/72,** G 11 B 3/00

(21) Anmeldenummer: **82110191.2**

(22) Anmeldetag: **05.11.82**

(54) **Verfahren und Einrichtung zum Schneiden einer Information in einen Aufzeichnungsträger.**

(30) Priorität: **16.11.81 DE 3145477**
**07.10.82 DE 3237135**

(43) Veröffentlichungstag der Anmeldung:
**25.05.83 Patentblatt 83/21**

(45) Bekanntmachung des Hinweises auf die Patenterteilung:
**17.09.86 Patentblatt 86/38**

(84) Benannte Vertragsstaaten:
**AT BE CH DE FR GB IT LI LU NL SE**

(56) Entgegenhaltungen:
**EP - A - 0 062 336**
**EP - A - 2 443 914**
**DE - A - 2 811 888**
**DE - A - 2 935 579**
**DE - B - 1 291 529**
**US - A - 3 403 233**

**JOURNAL OF THE AUDIO ENGINEERING SOCIETY,**
**Band 25, Nr. 3, März 1977, Seiten 99-106, New York, USA**
**G.A. BOGANTZ et al.: "Project notes/engineering briefs"**
**Prospekt CCD Produktinformation CCD 312 A Variable Analog Delayline**

(73) Patentinhaber: **TELDEC Schallplatten GmbH,**
**Heussweg 25, D-2000 Hamburg 20 (DE)**

(72) Erfinder: **Redlich, Horst, Plassstrasse 3a,**
**D-1000 Berlin 37 (DE)**

(74) Vertreter: **Einsel, Robert, Dipl.-Ing., Theodor-Stern-Kai 1,**
**D-6000 Frankfurt/Main 70 (DE)**

ACTORUM AG

## Beschreibung

Die Erfindung betrifft ein Verfahren und eine Einrichtung zum Schneiden einer Information in einen insbesondere metallischen, mechanisch abtastbaren Aufzeichnungsträger durch einen elektromechanisch erregten Schneidstichel.

Es ist bei der Aufzeichnung von Schallplatten bekannt und genormt, die Arbeitsebene eines Schneidstichels gegenüber der Senkrechten zum Aufzeichnungsträger um einen sogenannten Schneidwinkel von ca. 20° zu neigen. Dies ist erforderlich, um die Tiefenauslenkung des Schneidstichels der Tiefenabtastung der Abtastnadel des Wiedergabegerätes anzupassen. Auf diese Weise wird der vertikale Spurfehler bei der Wiedergabe klein gehalten (Internationale Elektronische Rundschau 1965, S. 15–20, insbesondere Seite 18 linke Spalte Ziffer 6).

Es ist auch bekannt, dass Abweichung von Schneidwinkel und dem entsprechenden Spurwinkel bei der Abtastung Störungen verursachen. Es ist ferner bekannt, dass Störungen auf der Abtastseite durch entsprechende simulierte Korrekturen auf der Schneidseite kompensiert werden können. Aus US-A-3 403 233 ist ein Verfahren nach dem Oberbegriff des Anspruchs 1 bekannt.

Beim Schneiden von Stereoaufzeichnungen in Metallschichten, insbesondere Kupfer, hat es sich insbesondere gezeigt, dass das Schneiden mit dem beim Lackfolienschneiden üblichen und theoretisch sinnvollen Schneidwinkel von etwa 20° wider Erwarten nicht zu verwertbaren Ergebnissen führte. Andererseits führte die Justierung eines geeigneten Schneidwinkels zu unerträglichen Störgeräuschen. Das schon frühzeitig diskutierte Schneiden der Informationen in Kupfer oder in anderen Metallen hat sich daher nie durchsetzen können.

Der Erfindung liegt die Aufgabe zugrunde, ein Verfahren und eine Einrichtung zum Schneiden einer Information in einem insbesondere aus Kupfer bestehenden Aufzeichnungsträger anzugeben, das Störgeräusche vermeidet, die durch Intermodulationsverzerrungen und Differenzfrequenzverzerrungen hervorgerufen werden.

Die Aufgabe wird durch die in den Ansprüchen 1 und 5 angegebene Erfindung gelöst. Weiterbildungen der Erfindung sind in abhängigen Ansprüchen beschrieben.

Durch Einstellung des Schneidwinkels auf einen für das verwendete Metall optimalen Wert wird eine Spur geschnitten, deren Wandungen eine deutlich bessere Oberflächengüte haben als die bisher üblichen Lackaufzeichnungen. Durch die elektronische Kompensation werden Intermodulationsverzerrungen und nichtlineare Verzerrungen praktisch unhörbar gemacht.

Die Erfindung wird nachstehend an Hand der Zeichnungen näher beschrieben. Diese zeigen in

Fig. 1 eine Darstellung zur Verdeutlichung der beim Schneiden auftretenden Kräfte,

Fig. 2 ein Prinzipschaltbild des erfindungsgemässen Entzerrers,

Fig. 3 ein Prinzipschaltbild einer Weiterbildung der Fig. 2,

Fig. 4 eine Abwandlung der Fig. 3,

Fig. 5 ein Detailschaltbild der Fig. 2,

Fig. 6 ein Detailschaltbild eines Teils der Fig. 4,

Fig. 7 ein Detail aus Fig. 6.

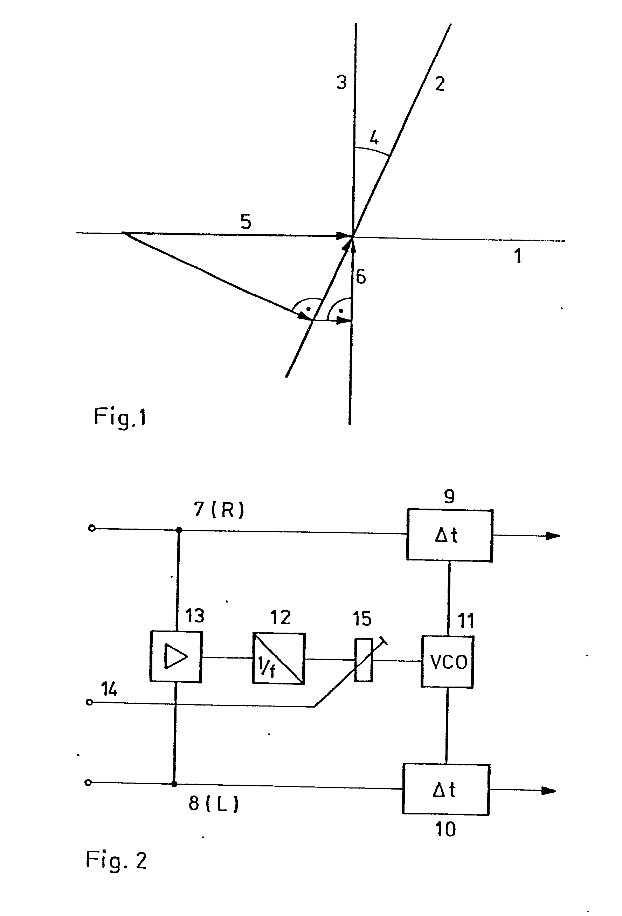

Fig. 1 zeigt ein Kräftediagramm zur Verdeutlichung der Verhältnisse beim Schneidvorgang. Die Ebene 1 entspricht der Ebene des Aufzeichnungsträgers, in dem die Information geschnitten werden soll. Die Ebene 2 ist die Bewegungsrichtung des Schneidstichels bei üblichen Aufzeichnungen in eine Lackfolie. Die Ebene 2 ist gegenüber der Senkrechten 3 zur Aufzeichnungsebene um einen Winkel 4 von etwa 20° geneigt. Treten in der Aufzeichnungsschicht Inhomogenitäten, d. h. insbesondere ein ungleichmässiger Schneidwiderstandsverlauf, auf, so wirken diese Kraftkomponenten auch in vertikaler Richtung. Nach Fig. 1 wirkt eine Kraftkomponente 5 als Teilkomponente 6 in vertikaler Richtung. Diese vertikale Komponente führt also zu einer Störmodulation, die durch die Inhomogenitäten des Materials des Schneidträgers verursacht sind. Beim Schneiden einer Information in einen metallischen Schneidträger ist der Schneidwiderstand, der dem Stichel entgegengesetzt wird, ungleich höher als beim Schneiden in eine Lackfolie. Der Schneidwiderstand hängt vor allem von der Schneidtiefe, d. h. von der Tiefenschriftkomponente ab.

Bei einer Inhomogenität in der zu schneidenden Metallschicht wird also bei Anwendung einer geneigten Schneidebene gegenüber der Senkrechten zur Aufzeichnungsebene die schwankende horizontale Kraftkomponente in eine Vertikalbewegung des Schneidstichels umgesetzt. Diese Vertikalbewegung verursacht eine Störmodulation. Bei Verkleinerung des Winkels 4 wird die Kraftkomponente 6 kleiner, im Grenzfall, wenn der Winkel 40° erreicht, verschwindet die vertikale Kraftkomponente 6 völlig. Ein klein gewählter Schneid- oder Spurwinkel verhindert somit eine derartige Störmodulation. Der Schneidstichel hat bei einem kleinen Schneid- oder Anstellwinkel zugleich bessere Verspanungsbedingungen für die Kupferschicht. Durch das bewusst falsche Einstellen des Schneid- oder Spurwinkels auf einen kleineren Winkel als den theoretisch günstigen 20°-Winkel wird die Verwendung von Schneidträgern aus Kupfer möglich gemacht.

Man könnte zwar die mechanische Impedanz der Schneidstichelanordnung – zum Ausgleich der durch Inhomogenitäten in den Metallschichten erhöhten mechanischen Kräfte – ebenfalls vergrössern. Dies würde jedoch eine entsprechend grosse elektrische Leistung für den Schneidvorgang erfordern, die einen sehr grossen Aufwand bedeuten würde.

Ein bewusst falsch gegenüber den Forderungen der Abtastung eingestellter Schneidwinkel 4 führt nun zu Abtastverzerrungen, den sogenannten Spurfehlern. Um den mechanisch auf einen von 20° abweichenden Schneid- oder Spurwinkel elektrisch so zu korrigieren, dass das Ergebnis dem genormten Wert von 20° entspricht, sind Schaltungen bekannt, die zur Vorwegkorrektur der bei der mechanischen Abtastung dienenden Spurfehlerwinkel dienen. (Vgl. z. B. in Internationale Elektronische Rundschau, Jahrgang 19 (1965) Heft 1, Seiten 15 bis 20.)

Fig. 2 zeigt eine Anordnung zum Ausgleich eines falschen, d. h. nicht der Abtastseite angepassten Schneidwinkels. Über Leitungen 7 und 8 gelangen Stereosignale R bzw. L zu Laufzeitketten 9 bzw. 10. Diese Laufzeitketten werden von einem spannungsabhängigen Oszillator (VCO) 11 so angesteuert, dass die Verzögerung dieser Laufzeitketten beeinflusst wird. Damit ergibt sich eine tiefenschrift- und damit amplitudenabhängige Steuerung der Laufzeiten der beiden Stereokanäle, so dass die durch den falsch eingestellten Winkel des Schneidstichels verursachten Verzerrungen kompensiert werden können.

Aus den Stereosignalen R und L wird durch Differenzbildung in der Stufe 13 ein tiefenschriftabhängiges Signal gewonnen. Die Stufe 13 ist beispielsweise ein Differenzverstärker. Sein Ausgangssignal wird über ein 1/f-Glied 12 einem Abschwächer 15 zugeführt. Das Mass der Abschwächung ist von einer Radiusinformation 14 beeinflussbar. Diese Information kann beispielsweise den Abschwächer mechanisch stufenweise variieren. Das abgeschwächte 1/f-Signal wird dem VCO 11 zugeführt. Der VCO hat eine zeitabhängige, insbesondere zeitproportionale Kennlinie. Mit steigender Frequenz verringert sich durch das 1/f-Glied 12 die tiefenschriftabhängige Komponente, um der Aufzeichnung mit konstanter Schnelle zu entsprechen.

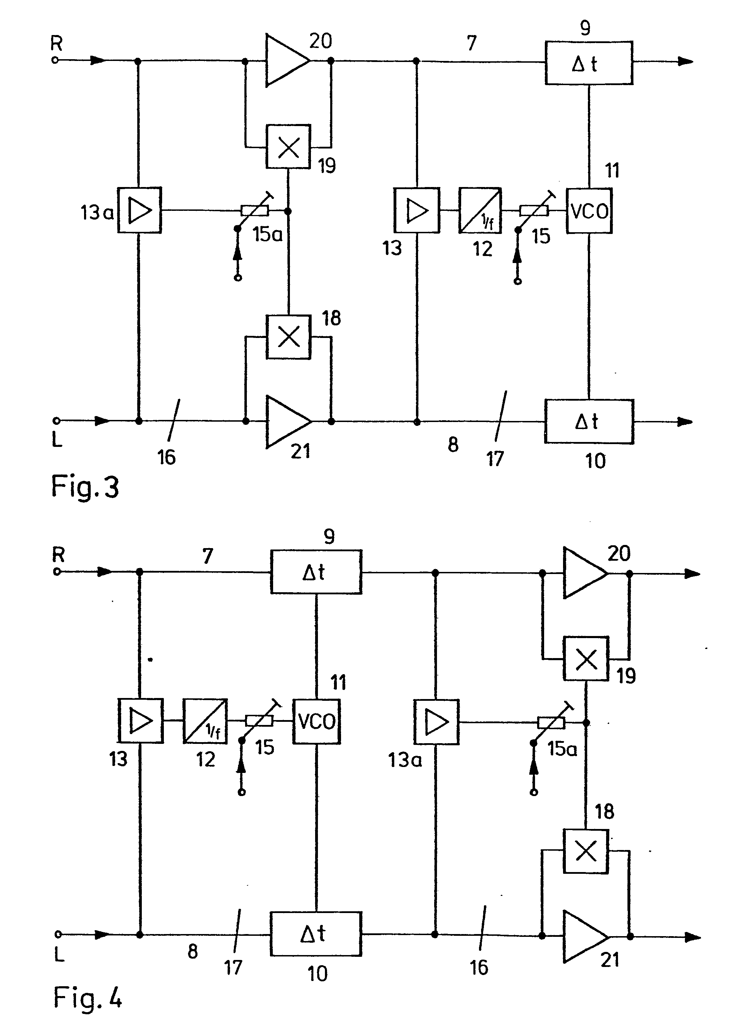

Mit der in Fig. 2 dargestellten Schaltung werden die sogenannten Intermodulationsverzerrungen nahezu völlig kompensiert, die durch den von der Norm abweichenden Schneidwinkel entstehen. Es hat sich jedoch gezeigt, dass bei der Abtastung niederfrequente Störungen hörbar waren. Eine nähere Untersuchung ergab, dass diese Störungen immer dann auftraten, wenn im Signal dicht nebeneinanderliegende Frequenzen mit etwa gleich grossem Pegel, z.B. 1.000 und 1.100 Hz, auftraten. Diese Frequenzen verursachten ein unerwünschtes unteres Seitenband von in diesem Falle 100 Hz. Fig. 3 zeigt eine Weiterbildung der Fig. 2, in der auch dieser Fehler beseitigt wird.

In Fig. 3 ist die Serienschaltung der in Fig. 2 dargestellten Schaltung und einer Schaltung zur Verringerung von geradzahligen Oberwellen, z.B. eines Multiplikators 16 dargestellt. Der Laufzeitmodulator 17 der Schaltung nach Fig. 2 dient zur Korrektur der Verzerrungen, die durch den Spurfehlerwinkel entstanden sind. Zur Verringerung bzw. Auslöschung des störenden Differenztones von z.B. 100 Hz ist dem Laufzeitmodulator 17 eine Multiplikatorstufe 16 vorgeschaltet. Diese Stufe 16 ist wie die Stufe 17 so ausgebildet, dass mittels eines Differenzverstärkers 13a ein tiefenschriftabhängiges Signal erzeugt wird. Auch wird das Ausgangssignal des Differenzverstärkers 13a über einen mit Radiusinformation verstellbaren Abschwächer 15a geleitet. Das abgeschwächte Signal wird in der Stufe 16 zwei Oberwellengeneratoren 18, 19 zugeführt, denen zugleich die Stereosignale R bzw. L zugeführt werden. Die Schaltung 16 ist so bemessen, dass in ihr wie im Laufzeitmodulator 17 ein Differenztonsignal entsteht, das jedoch gegenüber dem störenden Differenztonsignal des Laufzeitmodulators gegenphasig ist und durch Hinzufügen zum Stereosignal R bzw. L die Differenztonstörungen des Laufzeitmodulators beseitigt. Die beiden Stereosignale R und L sind zu diesem Zweck über zwei Verstärker 20 und 21 geführt, denen von den Stufen 18, 19 ein multiplikativer Anteil überlagert wird, dessen Grösse von der Differenzkomponente der Stereokanäle R und L sowie von der Radiusinformation abhängt.

Durch die besondere Ausgestaltung der Schaltung nach Fig. 3 werden somit die durch die Laufzeitverzögerungsanordnung 17 verursachten quadratischen Verzerrungen durch gegenphasiges Einkoppeln von quadratischen Anteilen, die im Multiplikator 16 erzeugt werden, kompensiert. Durch geeignete Einstellung der Verstärkungsfaktoren in der Multiplikatorschaltung lässt sich eine vollständige Kompensation der Intermodulationssowie der Differenzton-Verzerrungen erreichen.

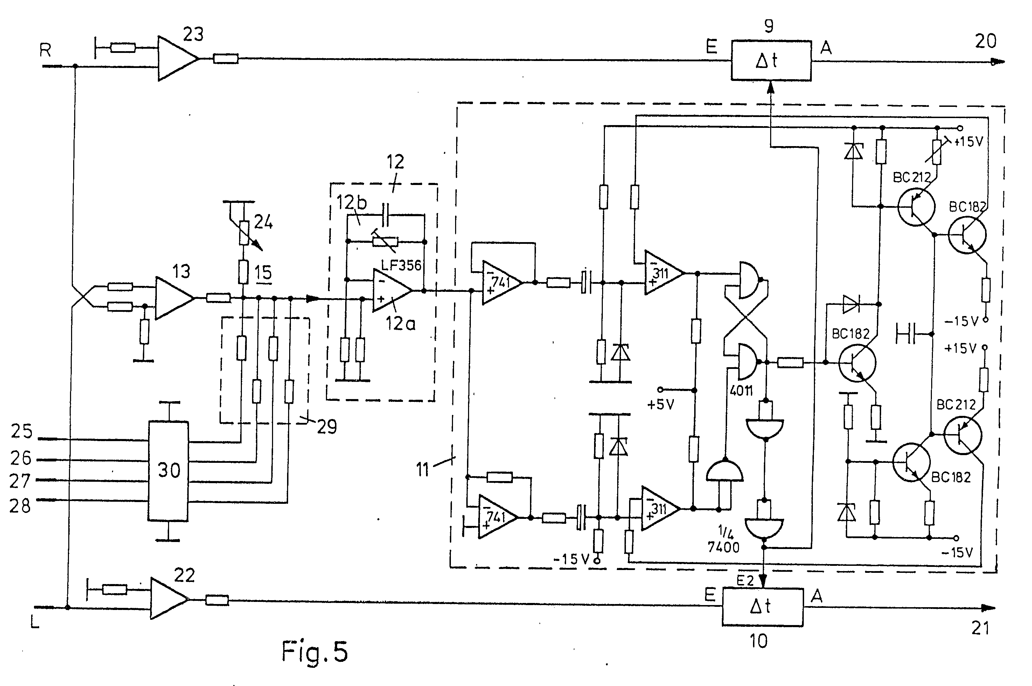

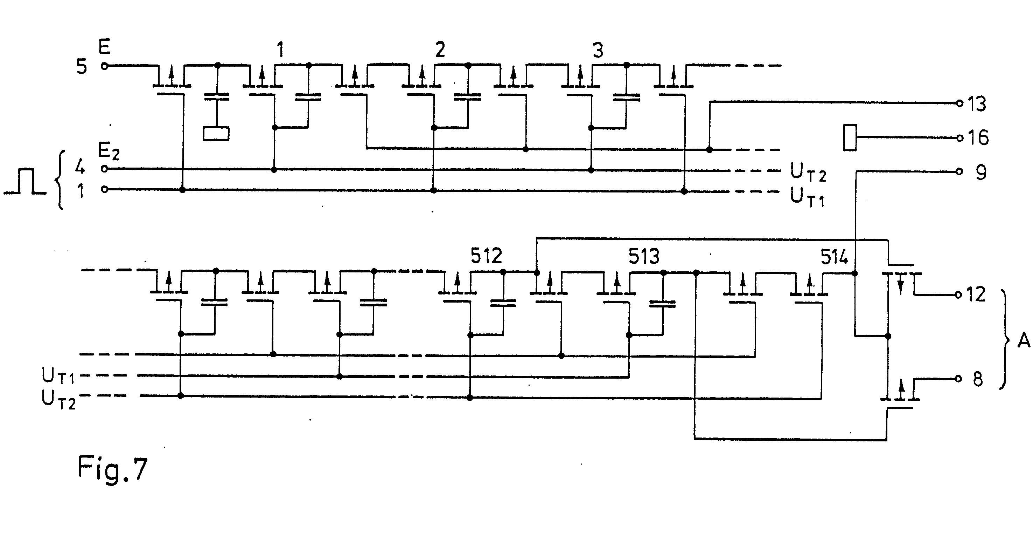

Fig. 5 zeigt ein Schaltungsbeispiel für einen Laufzeitmodulator nach Fig. 2 und Fig. 4. Von den Eingängen der Schaltung gelangen die Stereosignale R und L zu Verstärkern 22 und 23, deren Ausgänge mit den Eingängen E der steuerbaren Laufzeitketten 9 bzw. 10 verbunden sind. Eine Detailschaltung für die Laufzeitketten 9, 10 ist in Fig. 7 dargestellt. Die Stereosignale werden ausserdem einem Operationsverstärker 13 zugeführt, der als Differenzverstärker geschaltet ist. An seinem Ausgang entsteht daher das Differenzsignal zwischen R und L, das der Tiefenschriftkomponente entspricht. Das tiefenschriftabhängige Ausgangssignal des Verstärkers 13 ist über ein Potentiometer oder einen einstellbaren Widerstand 24 in der Amplitude einstellbar. Diese Amplitude ist ausserdem in Abhängigkeit von der Radiuskomponente des Schneidstichels veränderbar durch einen Abschwächer 15, der entweder aus einer elektrisch beeinflussbaren Spannungsteilerschaltung 24, 29 oder aus einer mechanisch steuerbaren Ausbildung des Potentiometers 24 besteht. Die radiusabhängige Veränderung erfolgt in Abhängigkeit von der Messung des jeweiligen Ortes des Schneidstichels auf dem Aufzeichnungsträger, z.B. über Abtastorgane 25–28. Das tiefenschriftabhängige Ausgangssignal der Schaltung 15 wird der Schaltung 12 zugeführt, in der ein Verstärker 12a mit frequenzabhängiger Gegenkopplung durch ein RC-Glied 12b dafür sorgt, dass die Amplitude des als Steuersignal für den VCO 11 genutzten Ausgangssignals der Schaltung 12 für höhere Frequenzen verringert wird. Dadurch wird erreicht, dass die Frequenz des Oszillators 11 in der für die Spurfehlerkompensation gewünschten Weise variiert wird. Die Ausgangsfrequenz des VCO 11 gelangt als Takt zu Gegentakteingängen $E_2$ der Laufzeitketten 9, 10. An deren Ausgängen A werden die gesteuerten Stereosignale R, L abgenommen und den Eingängen der Multiplikatorschaltung 16 zugeführt.

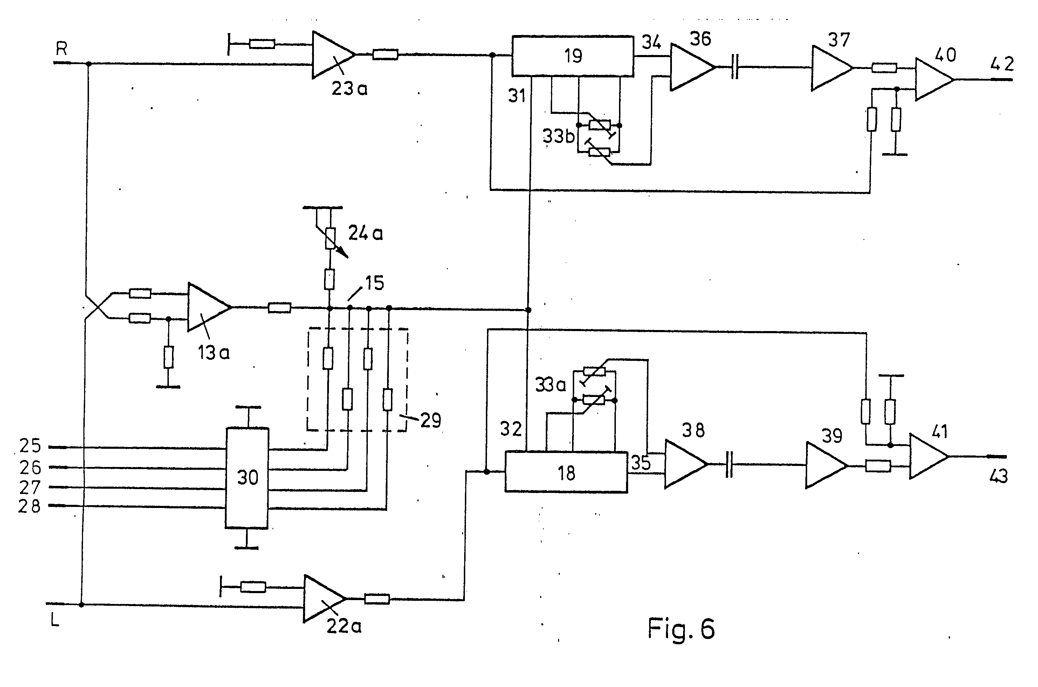

Fig. 6 zeigt das Schaltungsbeispiel eines Multiplikators nach Fig. 3. Von den Eingängen der
Schaltung gelangen die Stereosignale R und L zu
Verstärkern 22a und 23a, deren Ausgänge mit
Eingängen der Multiplikatoren 18 bzw. 19 verbunden sind. Als Multiplikatoren können z.B. die
Schaltkreise MC 1494 der Firma Motorola verwendet werden. Die Stereosignale R und L werden
ausserdem einem Operationsverstärker 13a zugeführt, der als Differenzverstärker geschaltet ist.
An seinem Ausgang entsteht daher das Differenzsignal zwischen R und L, das der Tiefenschriftkomponente entspricht. Das tiefenschriftabhängige Signal ist über ein Potentiometer 24a in der
Amplitude einstellbar. Die Amplitude ist auch in
Abhängigkeit von der Radiuskomponente des
Schneidstichels veränderbar. Der jeweilige Ort
des Schneidstichels auf dem Aufzeichnungsträger
wird über die Eingänge 25–28 abgetastet. Als Ergebnis wird die tiefenschriftabhängige Komponente in Stufen über das Widerstandsnetzwerk 29
und den Trennverstärker 30 beeinflusst. Die Radiussteuerung ist vorteilhaft, da bei einer konstant
aufgezeichneten Frequenz der Radius gleichzeitig
proportional der aufgezeichneten Wellenlänge ist.
Diese derart beeinflusste Tiefenschriftkomponente wird zweiten Eingängen 31 bzw. 32 der Multiplikatoren 18 bzw. 19 zugeführt. Über die Abschwächer 33 ist der multiplikative Anteil der Signale
einstellbar. An den Ausgängen 34 bzw. 35 der
Multiplikatoren 18 bzw. 19 ist der multiplikative
Anteil abnehmbar und wird über Verstärker 36, 37
bzw. 38, 39 Addierern 40 bzw. 41 zugeführt. Den
anderen Eingängen der Addierer wird das rechte
bzw. linke Stereosignal R bzw. L direkt zugeführt.
Damit stehen an den Ausgängen 42 bzw. 43 Signale zur Verfügung, die aus der Addition der
direkten Signale mit einem durch die Tiefenschriftkomponente gesteuerten multiplikativen
Anteil bestehen. Das bedeutet, dass diese Schaltung Differenzsignale liefert, wenn die Stereosignale dicht nebeneinanderliegende Frequenzen
(z.B. 1.000 und 1.100 Hz) enthalten. Durch die Abschwächer 33a, b lassen sich die multiplikativen
Anteile auf einen derartigen Wert einstellen, dass
sie zu den entsprechenden Anteilen der Laufzeitmodulatoren 7 bzw. 8 gegenphasig sind und so die
störenden K 2, 4 und Differenzfrequenzen unterdrücken.

Die Reihenfolge der Schaltungen 16 und 17 in
Fig. 4 und 5 ist gegenüber Fig. 3 vertauscht, um
eine Störung der Funktion der Laufzeitmodulatoren 17 durch die Ausgangssignale der Schaltung
16 zu vermeiden.

Fig. 7 zeigt ein Schaltungsbeispiel für die in
Fig. 5 dargestellte Laufzeitkette. Bei einem erprobten Ausführungsbeispiel hatte diese Laufzeitkette acht Speicherstellen mit je etwa 20 µs und
wurde mit einer VCO Ausgangsfrequenz von
50 kHz bis 500 kHz getaktet. Dadurch ergab sich
ein Regelbereich der Laufzeit von 8 µs bis 80 µs.
Angestrebt wird ein Laufzeitbereich von einer minimalen Laufzeit bis etwa 100 µs.

**Patentansprüche**

1. Verfahren zur Informationsaufzeichnung
durch Schneiden einer Rille mittels eines elektromechanisch erregten Schneidstichels in einen
insbesondere metallischen, mechanisch abtastbaren Aufzeichnungsträger, wobei

a) der Schneidstichel so eingestellt wird, dass
er mit einem Schneidwinkel (4) betrieben wird, der
geringer ist als der genormte Wert (z.B. 20°), insbesondere kleiner ist als 5°,

b) die durch den von der Norm (20°) abweichenden Schneidwinkel verursachten Verzerrungen
elektronisch kompensiert werden,

c) zur Kompensation der Verzerrungen eine
Tiefenschriftkomponente der aufzuzeichnenden
Information erzeugt wird, die eine Steuerschaltung zur Fortschaltung von mindestens einer Laufzeitleitung erzeugt, über die die Signalkomponenten geleitet werden
dadurch gekennzeichnet, dass

d) ein spannungsabhängiger Oszillator (VCO,
11) vorgesehen ist, dessen Frequenz durch die
Tiefenschriftkomponente über ein Integrierglied
(12) veränderbar ist und der eine Steuerspannung
zur Fortschaltung der mindestens einen Laufzeitleitung (9, 10) erzeugt und

e) die durch Kompensation der Verzerrungen
entstehenden Seitenbandfrequenzen durch gegenphasiges Hinzufügen von gleichartigen Seitenbandfrequenzen kompensiert werden (13, 15a,
18–21).

2. Verfahren nach Anspruch 1, dadurch gekennzeichnet, dass der spannungsabhängige Oszillator (VCO, 11) eine zeitproportionale Kennlinie aufweist.

3. Verfahren nach Anspruch 1 oder 2, dadurch
gekennzeichnet, dass die Tiefenschriftkomponente durch Differenzbildung der Signalkomponenten
zweier Stereokanäle ermittelt wird, wobei die Tiefenschriftkomponente jede Signalkomponente (R,
L) eines Stereokanals in seiner Laufzeit beeinflusst.

4. Verfahren nach einem der Ansprüche 1 bis 3,
dadurch gekennzeichnet, dass die Tiefenschriftkomponente in Abhängigkeit von einer Radiusinformation des jeweiligen Ortes des Schneidstichels auf dem Aufzeichnungsträger veränderbar
ist.

5. Einrichtung zur Informationsaufzeichnung
durch Schneiden einer Rille mittels eines elektromechanisch erregten Schneidstichels in einen
insbesondere metallischen, mechanisch abtastbaren Aufzeichnungsträger, wobei

a) der Schneidstichel so eingestellt wird, dass
er mit einem Schneidwinkel (4) betrieben wird, der
geringer ist als der genormte Wert (z.B. 20°), insbesondere kleiner ist als 5°,

b) die durch den von der Norm (20°) abweichenden Schneidwinkel verursachten Verzerrungen
elektronisch kompensiert werden,

c) zur Kompensation der Verzerrungen eine
Tiefenschriftkomponente der aufzuzeichnenden
Information erzeugt wird, die eine Steuerschaltung zur Fortschaltung von mindestens einer Laufzeitleitung erzeugt, über die Signalkomponenten geleitet werden,

dadurch gekennzeichnet, dass

d) ein spannungsabhängiger Oszillator (VCO, 11) vorgesehen ist, dessen Frequenz durch die Tiefenschriftkomponente über ein Integrierglied (12) veränderbar ist und der eine Steuerspannung zur Fortschaltung der mindestens einen Laufzeitleitung (9, 10) erzeugt und

e) die durch Kompensation der Verzerrungen entstehenden Seitenbandfrequenzen durch gegenphasiges Hinzufügen von gleichartigen Seitenbandfrequenzen kompensiert werden (13, 15a, 18–21).

6. Einrichtung nach Anspruch 5, dadurch gekennzeichnet, dass zur Verringerung geradzahliger Oberwellen eine Multiplikationsschaltung (16) mit quadratischer Kennlinie vorgesehen ist.

7. Einrichtung nach Anspruch 5, dadurch gekennzeichnet, dass ein Laufzeitmodulator (17) vorgesehen ist, der jedes Signal eines Stereosignals durch eine radiusabhängige Tiefenschriftkomponente beeinflusst, dass eine Multiplikatorschaltung (16) vorgesehen ist, die jedes Signal des Stereokanals mit der radiusabhängigen Tiefenschriftkomponente verknüpft und dass das Ausgangssignal des Laufzeitmodulators (17) der Multiplikatorschaltung (16) zugeführt ist.

**Claims**

1. Process for the recording of information by the cutting of a groove in a mechanically playable record carrier, especially of metal, by means of an electro-mechanically activated cutting stylus, wherein

a) the cutting stylus is so set up that it is driven at a cutting angle (4) which is less than the norm (for example 20°), especially being less than 5°,

b) the distortions caused by deviation of the cutting angle from the norm (20°) are compensated electronically,

c) for the compensation of the distortions a writing depth componenet is derived from the information to be recorded which reaches a control circuit for the direct switching of at least one transit time channel over which the signal ccmponent is conducted,

characterized in that

d) a voltage controlled oscillator (VCO, 11) is provided, the frequency of which is variable by the writing depth component through an integration element (12) and which produces a control voltage for the direct switching of at least one transit time channel (9, 10) and

e) the side band frequencies arising as a result of the compensation of the distortions are compensated by antiphase addition of similar side band frequencies (13, 15a, 18–21).

2. Process according to Claim 1, characterized in that the voltage controlled oscillator (VCO, 11) has a time-proportional characteristic.

3. Process according to Claim 1 or 2, characterized in that the writing depth component is ascertained by the differencing of the signal components of two stereo channels, wherein the writing depth component influences the transit time of each signal component (R, L) of a stereo channel.

4. Process according to Claim 1 to 3, characterized in that the writing depth component is adjustable in dependence upon a radius indication of the current position of the cutting stylus.

5. Apparatus for the recording of information by cutting a groove in a mechanically playable record carrier, especially of metal, by means of an electro-magnetically activated cutting stylus, wherein

a) the cutting stylus is so set up that it is driven at a cutting angle (4) which is smaller than the norm (for example 20°), especially being less than 5°,

b) the distortions caused by the cutting angle deviating from the norm (20°) are compensated electronically,

c) for the compensation of the distortions a writing depth component of the information to be recorded is derived which reaches a control circuit for the direct switching of at least one transit time channel, over which signal components are conducted,

characterized in that

d) a voltage controlled oscillator (VCO, 11) is provided, the frequency of which is variable in response to the writing depth component by way of an integrating element and which derives a control voltage for the direct switching of at least one transit time channel (9, 10) and

e) The side band frequencies arising as a result of compensation of the distortion are compensated by the anti-phase addition of similar side band frequencies (13, 15a, 18–21).

6. Apparatus according to Claim 5, characterized in that for the reduction of even harmonics a multiplication circuit (16) is provided with a quadratic characteristic.

7. Apparatus according to Claim 5, characterized in that a transit time modulator (17) is provided, which influences each signal of a stereo signal through a radius dependent writing depth component, that a multiplier circuit (16) is provided which combines each signal of the stereo channel with the radius dependent writing depth component, and that the output signal of the transit time modulator (17) is applied to the multiplier circuit (16).

**Revendications**

1. Procédé pour l'enregistrement d'une information par gravure d'un sillon sur un support d'enregistrement, métallique en particulier et lisible mécaniquement, à l'aide d'un burin électromécanique, ledit procédé présentant les particularités suivantes:

a) le burin est réglé de façon à fonctionner avec un angle de gravure (4) inférieur à la valeur normalisée (20° par exemple), et notamment inférieur à 5°;

b) les distorsions produites par l'angle de gravure différant de la valeur normalisée (20°) sont compensées électroniquement;

c) une composante de gravure verticale de l'information à enregistrer est produite pour compenser les distorsions par un circuit de commande de la commutation d'une ligne de retard au moins, par laquelle les composantes du signal sont transmises,

et caractérisé en ce que:

d) un oscillateur fonction de la tension (VCO, 11) est prévu, dont un intégrateur (12) fait varier la fréquence en fonction de la composante de gravure verticale et qui délivre une tension de commande pour la commutation d'une ligne de retard au moins (9, 10); et

e) les fréquences de bande latérale produites par la compensation des distorsions sont compensées par l'addition en opposition de phase de fréquence de bande latérale identiques (13, 15a, 18–21).

2. Procédé selon revendication 1, caractérisé en ce que l'oscillateur fonction de la tension (VCO, 11) présente une caractéristique proportionnelle au temps.

3. Procédé selon une des revendications 1 ou 2, caractérisé en ce que la composante de gravure différentielle est déterminée par différentiation des composantes du signal de deux voies stéréophoniques, la composante de gravure verticale influençant le temps de propagation de chaque composante du signal (R, L) d'une voie stéréophonique.

4. Procédé selon une quelconque des revendications 1 à 3, caractérisé en ce que la composante de gravure verticale est variable en fonction d'une information de rayon de l'emplacement instantané du burin sur le support d'enregistrement.

5. Dispositif pour l'enregistrement d'une information par gravure d'un sillon sur un support d'enregistrement, métallique en particulier et lisible mécaniquement, à l'aide d'un burin électromagnétique, ledit dispositif présentant les particularités suivantes:

a) le burin est réglé de façon à fonctionner avec un angle de gravure (4) inférieur à la valeur normalisée (20° par exemple), et notamment inférieur à 5°,

b) les distorsions produites par l'angle de gravure différant de la valeur normalisée (20°) sont compensées électroniquement,

c) une composante de gravure verticale de l'information à enregistrer est délivrée pour la compensation des distorsions par un circuit de commande pour la commutation d'une ligne de retard au moins, qui transmet les composantes du signal,

et caractérisé en ce que:

d) un oscillateur fonction de la tension (VCO, 11) est prévu, dont un intégrateur (12) fait varier la fréquence par la composante de gravure verticale et qui délivre une tension de commande pour la commutation d'une ligne de retard au moins (9, 10); et

e) les fréquences de bande latérale produites par la compensation des distorsions sont compensées par l'addition en opposition de phase de fréquences de bande latérale identiques (13, 15a, 18–21).

6. Dispositif selon revendication 5, caractérisé par un multiplicateur (16) à caractéristique quadratique pour la réduction des harmoniques pairs.

7. Dispositif selon revendication 5, caractérisé en ce qu'un modulateur de temps de propagation (17) est prévu et influence chaque composante d'un signal stéréophonique à l'aide d'une composante de gravure verticale fonction du rayon; un multiplicateur (16) est prévu, qui combine chaque signal de la voie stéréophonique avec la composante de gravure verticale fonction du rayon; et le signal de sortie du modulateur de temps de propagation (17) est appliqué au multiplicateur (16).

Fig.1

Fig. 2

Fig.3

Fig.4

Fig.5

Fig. 6

0 079 538

Fig.7